# EUROPEAN PATENT APPLICATION

(11) **EP 2 316 554 A1**
(43) Date of publication of application: **04.05.2011**
(21) Application number: 09794399.7
(22) Date of filing: 06.07.2009
(51) Int. Cl.: B01D 25/12, B01D 33/04, B01D 41/04, C02F 11/12

(54) **METHOD AND DEVICE FOR CLEANING FILTER CLOTHS OF FILTER PRESS DEWATERER**

(30) Priority: 08.07.2008 JP 2008178390
(71) Applicant: Mitsui Engineering & Shipbuilding Co., Ltd., Chuo-ku Tokyo 104-8439 (JP); Taiheiyo Cement Corporation, Tokyo 135-8578 (JP)
(72) Inventor: KATAKURA, Masahiko, Tokyo 104-8439 (JP); SUZUKI, Takao, Tokyo 104-8439 (JP); NAKAMURA,Tomomichi, Chichibu-shi Saitama 368-0005 (JP); WADA, Hajime, Kumagaya-shi Saitama 360-0843 (JP)
(74) Representative: WSL Patentanwälte
(86) International application number: PCT/JP2009/062286
(87) International publication number: WO 2010/004955

(57) **Abstract**

An object is to provide a method and a device for cleaning a filter cloth of a filter press dewaterer that are capable of restoring a filter cloth by effectively cleaning the filter cloth while saving the amount of water used for cleaning without using an acid which requires wastewater treatment. The method is for cleaning a filter cloth of a filter press dewaterer, which dewaters a slurry containing a calcium component, with any one of water, steam, and a mixture thereof. The filter cloth is cleaned by spraying, on the filter cloth to which a tension of 10 to 2000 N/5cm is applied, any one of: water with a temperature of 100 to 140°C and a pressure of 50 to 200 kg/cm²; steam with a temperature of 100 to 140°C; and a mixture thereof.

## Description

### TECHNICAL FIELD

The present invention relates to a method and a device for cleaning a filter cloth of a filter press dewaterer. Specifically, it relates to a method and a device for cleaning a filter cloth of a dewaterer for dewatering a fly-ash slurry produced in thermal power stations and the like.

### BACKGROUND ART

A filter press dewaterer is one of apparatuses for solid-liquid separation of a slurry containing fine particles by dewatering the slurry in quarries, sludge disposal facilities, and the like. The filter press dewaterer is configured to dewater a slurry by supply the slurry either between filter cloths or on top of a filter cloth, and then pressing and squeezing the slurry.

The filter press dewaterer has, as a characteristic feature, a configuration capable of easily pressing a slurry with a high pressure. Accordingly, the ability to lower the water content in a slurry is considerably high. However, the dewaterer has a drawback that repetitive operations thereof cause clogging of its filter cloth, which in turn drops noticeably the dewatering effect of the filter press dewaterer.

To dissolve the clogging of the filter cloth, there has been proposed a filter press dewaterer equipped with a shower unit to clean the filter cloth. The shower unit, however, has problems of low cleaning capability and a large consumption of water.

Accordingly, in a site where a filter press dewaterer is used, a filter cloth needs to be cleaned on a regular basis in addition of cleaning with a shower unit. As such a method, a method for restoring a filter cloth using a brush is adopted in which a filter cloth is cleaned by being soaked in either water or hydrochloric acid for a while and then brushed. In this method, the cleaning cannot be done manually if a filter cloth has a large area with an increased workload. In addition, there is a drawback that the surface of the filter cloth may be damaged, hence deteriorating the performance of the filter cloth and shortening the life of the filter cloth.

Another method is disclosed in which a filter cloth is restored with a dedicated cleaning device using an acidic cleaning agent (see Patent Document 1, for example).

Particularly, in a fly-ash slurry dewatering process in treatment for removing unburned carbon from fly ash produced in a thermal power station, causes of clogging of a filter cloth are concentration increases of fine components of fly ash, and calcium carbonate generated by combining a gypsum component that elutes from the fly ash with carbon dioxide absorbed from the air. In this case, the above-mentioned acid cleaning is expected to be effective on calcium carbonate.

### PRIOR ART DOCUMENT

### PATENT DOCUMENT

Patent Document 1: Japanese patent application *Kokai* publication No. 2001-347110

### SUMMARY OF THE INVENTION

### PROBLEM TO BE SOLVED BY THE INVENTION

It is certain that the method for cleaning a filter cloth using an acid has some effects, but the use of an acid as the cleaning agent requires a device resistant to the corrosion by the acid. In addition, the conveyor system contaminated by the products might interrupt the automated operation. Furthermore, the work would be dangerous if performed manually. Additionally, even in the case of using the cleaning device described in Patent Document 1, the cleaning agent after use requires wastewater treatment. Thus, equipment for this must be installed together with the filter press dewaterer, resulting in higher cost for the treatment facility as a whole.

In addition, handling microscopic particles and the like, the wastewater treatment is required, for the purpose of discharging the cleaning agent and water, without discharging the microscopic particles to the environment. To this end, it is preferable to run the dewaterer in a closed system as far as possible. Not using much water and achieving high cleaning effects are prerequisites for the above-mentioned cleaning of a filter cloth with water. These are issues yet to be settled.

The present invention has been made to solve the above-mentioned problems, and aims to provide a method and a device for cleaning a filter cloth of a filter press dewaterer that are capable of restoring a filter cloth by effectively cleaning the filter cloth while saving the amount of water used for cleaning without using an acid which requires wastewater treatment.

### MEANS FOR SOLVING THE PROBLEM

To accomplish the above-mentioned object, a filter cloth cleaning method according to the present invention is a filter cloth cleaning method with which a filter cloth of a filter press dewaterer for dewatering a slurry containing a calcium component is cleaned with any one of water, steam, and a mixture thereof. The method is characterized in that the filter cloth is cleaned by spraying, on the filter cloth to which a tension of 10 to 2000 N/5cm is applied, any one of: water with a temperature of 100 to 140°C and a pressure of 50 to 200 kg/cm²; steam with a temperature of 100 to 140°C; and a mixture thereof.

Almost all the objects attached to the filter cloth can be removed by spraying any one of the high-pressure high-temperature water, the steam, and the mixture thereof on the filter cloth to which the tension is applied. The filter cloth is restored to almost its brand-new level.

This is accomplished by dissolving the attached fine particles containing a calcium component in water with any one of the high-pressure high-temperature water, the steam, and the mixture thereof. In addition, if steam, which permeates through a filter cloth more easily than water, is used for cleaning, the fine particles that clog the filter cloth are mechanically forced out of the filter cloth, resulting in a higher cleaning effect. Meanwhile, our experiment showed that a small tension applied to the filter cloth produces no similar effect.

In addition, the high pressure of the sprayed water, steam, or mixture thereof allows the cleaning work to be done by spraying only one side of the filter cloth. If a filter cloth that has a high permeability to water, steam, or a mixture thereof is chosen, a further improvement in the cleaning effect can be accomplished.

In addition, water, steam, or a mixture thereof is considerably high in cleaning capability, so that the consumption of water needed can be reduced.

To accomplish the above-mentioned object, a filter cloth cleaning method according to the present invention is a filter cloth cleaning method with which a polypropylene filter cloth of a filter press dewaterer for dewatering a slurry containing a calcium component is cleaned with any one of water, steam, and a mixture thereof. The method is characterized in that the filter cloth is cleaned by spraying, on the filter cloth to which a tension of 10 to 2000 N/5cm is applied, any one of: water with a temperature of 100 to 120°C and a pressure of 50 to 200 kg/cm²; steam with a temperature of 100 to 120°C; and a mixture thereof.

When the filter cloth is made of polypropylene, a cleaning liquid at 130°C or higher softens and deforms the filter cloth. Accordingly, the temperature is set low: 120°C. Our experimental result showed that the performance of the filter cloth can be restored to almost its brand-new level, as in the case of 130°C.

To accomplish the above-mentioned object, a filter cloth cleaning method according to the present invention is a filter cloth cleaning method with which a polypropylene filter cloth of a filter press dewaterer for dewatering a fly-ash slurry is cleaned with any one of water, steam, and a mixture thereof. The method is characterized in that the filter cloth is cleaned by spraying, on the filter cloth to which a tension of 10 to 2000 N/5cm is applied, any one of: water with a temperature of 110 to 120°C and a pressure of 80 to 100 kg/cm²; steam with a temperature of 110 to 120°C; and a mixture thereof.

When a fly-ash slurry is the dewatered target, calcium carbonate, calcium sulfate, and fly ash fine particles are the causes of the clogging (objects) attached to the filter cloth. Accordingly, by spraying the high-pressure high-temperature cleaning liquid, the object can be dissolved into any one of the water, the steam, and the mixture thereof. Thereby, the filter cloth can be restored.

To accomplish the above-mentioned object, a filter cloth cleaning device according to the present invention is a filter cloth cleaning device with which a filter cloth of a filter press dewaterer for dewatering a slurry containing a calcium component is cleaned with any one of water, steam, and a mixture thereof. The device is characterized by including: a tensioner that applies a tension to the filter cloth; a mixture-generating unit that generates a cleaning liquid by heating and pressurizing water to a high temperature and a high pressure, by heating steam to a high temperature, or by producing a mixture thereof; and a cleaning nozzle for spraying the cleaning liquid on the filter cloth. The device is characterized in that the mixture-generating unit sprays the cleaning liquid on the filter cloth to which a tension of 10 to 2000 N/5cm is applied by the tensioner, the cleaning liquid being any one of: water with a temperature of 100 to 140°C and a pressure of 50 to 200 kg/cm²; steam with a temperature of 100 to 120°C; and a mixture thereof.

The device allows automatic cleaning of the filter cloth. Accordingly, even a filter cloth having a large area can be cleaned with the workability kept high.

To accomplish the above-mentioned object, a filter cloth cleaning device according to the present invention is a filter cloth cleaning device with which a polypropylene filter cloth of a filter press dewaterer for dewatering a fly-ash slurry is cleaned with any one of water, steam, and a mixture thereof. The device is characterized by including: a tensioner that applies a tension to the filter cloth; a mixture-generating unit that generates a cleaning liquid by heating and pressurizing water to a high temperature and a high pressure, by heating steam to a high temperature, or by producing a mixture thereof; and a cleaning nozzle for spraying the cleaning liquid on the filter cloth. The device characterized in that the mixture-generating unit sprays the cleaning liquid on the filter cloth to which a tension of 10 to 2000 N/5cm is applied by the tensioner, the cleaning liquid being any one of: water with a temperature of 110 to 140°C and a pressure of 80 to 100 kg/cm²; steam with a temperature of 110 to 140°C; and a mixture thereof.

### EFFECTS OF THE INVENTION

According to the method and the device for cleaning a filter cloth of the present invention, highly effective cleaning of filter cloth is accomplished using water, steam, or a mixture thereof. This makes it possible to provide a method and a device for cleaning a filter cloth of a filter press dewaterer that are capable of restoring a filter cloth by effectively cleaning the filter cloth while saving the amount of water used for cleaning without using an acid which requires wastewater treatment.

Consequently, the filtering performance of the filter cloth can be restored to almost its brand-new level, when the filter cloth is cleaned.

### BRIEF DESCRIPTION OF THE DRAWINGS

[Fig. 1] Fig. 1 is a schematic diagram illustrating a device for cleaning a filter cloth according to one embodiment of the present invention.
[Fig. 2] Fig. 2 is a schematic diagram of a spray nozzle.
[Fig. 3] Fig. 3 is a schematic diagram illustrating the relationship between a filter cloth and a spray shape.

### BEST MODES FOR CARRYING OUT THE INVENTION

The present invention will be specifically described below by referring to an embodiment illustrated in the drawings.

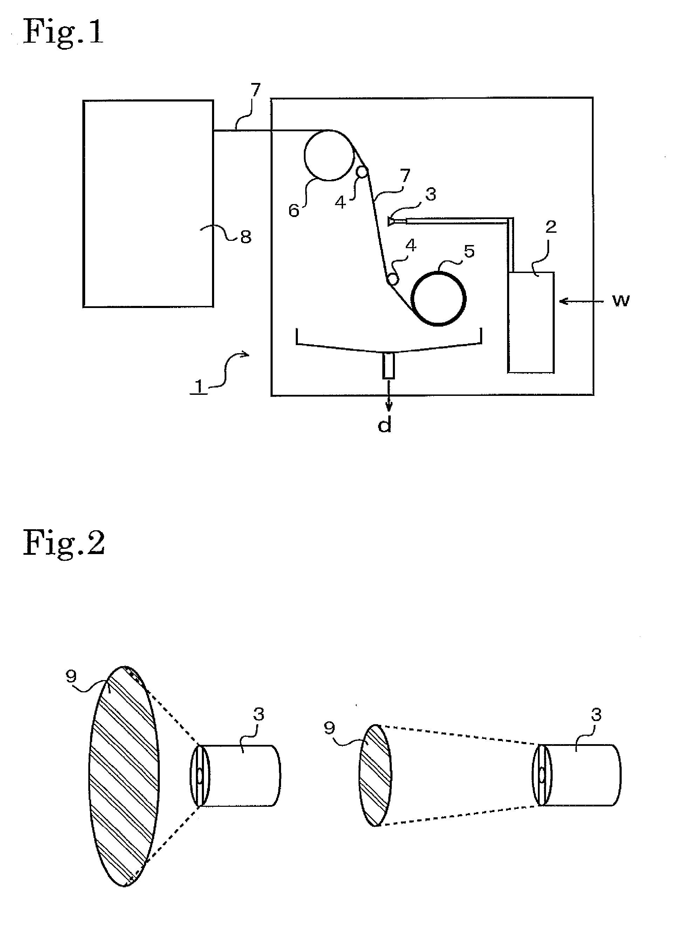

Fig. 1 illustrates a schematic of a filter cloth cleaning device which is an embodiment of the present invention. A filter cloth cleaning device 1 is configured such that a filter cloth 7 from a dewaterer 8 is wound around a filter cloth-winder shaft 6, then passes on two filter cloth tensioners 4, and is wound around a filter cloth-winder shaft 5 for cleaning. To clean the filter cloth 7, a high-pressure high-temperature water-generating unit 2 generates and sprays any one of water, steam, and a mixture thereof through a spray nozzle 3 (cleaning nozzle) on a tensioned portion of the filter cloth 7 between the two filter cloth tensioners 4.

Once the filter cloth 7 from the dewaterer is wound, the filter cloth-winder shaft 6, the filter cloth-winder shaft 5 for cleaning and the filter cloth tensioners 4 work cooperatively to apply a predetermined tension of 10 to 2000 N/5cm to the portion, between the two filter cloth tensioners 4, of the filter cloth 7. The values are obtained by an experiment. Applying a tension within this range to the filter cloth 7 allows the filter cloth 7 to be cleaned effectively, so that the filtering performance is recovered to almost its brand-new level.

If the dewaterer 8 has an enough space to set the filter cloth cleaning device 1 therein, the device 1 is set inside the dewaterer 8. This enables cleaning the filter cloth 7 without taking out.

Furthermore, the filter cloth cleaning device 1 is capable of restoring (cleaning) the filter cloth 7 so effectively that the performance of the filter cloth 7 can be restored to almost its brand-new level. Thus, frequent replacement of the filter cloth 7 in the dewaterer 8, which has been needed conventionally, is no longer necessary. Accordingly, the running cost of the dewaterer 8 can be cut significantly. In summary, a high-performance filter cloth can be used continuously for a longer period of time at lower cost.

Fig. 2 illustrates a schematic of the spray nozzle 3 used in the present invention. The settings of both the temperature and the pressure of any one of water, steam, and a mixture thereof are important in the present invention. For this reason, the spray nozzle 3 is equipped with a mechanism to adjust the distance between the spray nozzle 3 and the filter cloth. In addition, the spray nozzle 3 is configured such that a spraying area (spray shape 9) can also be adjusted in accordance with the above-mentioned distance.

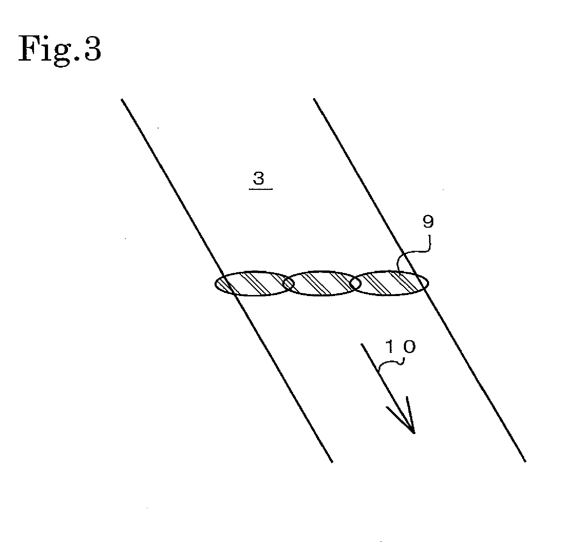

Fig. 3 illustrates the relationship between the filter cloth 3 and the spray shape 9. The filter cloth 3 is configured to move in a filter cloth-advancing direction 10. Here, if a single nozzle is provided and moves sideways over a filter cloth that is moving fast, the cleaning cannot be done evenly. Accordingly, it is preferable to provide plural spray nozzles 3 and cause them to spray high-temperature high-pressure water, steam, or a mixture thereof from their respective fixed positions.

In addition, the tensioners 4 are provided with vibration mechanisms. While the filter cloth is cleaned using the spray nozzle 3, the vibration mechanisms vibrate the filter cloth applied with the predetermined tension. This configuration can enhance the cleaning efficiency of the filter cloth.

As has been described thus far, according to the present invention, highly-effective cleaning of a filter cloth is accomplished using water, steam, or a mixture thereof. This makes it possible to provide a method and a device for cleaning a filter cloth of a filter press dewaterer that are capable of restoring a filter cloth by effectively cleaning the filter cloth while saving the amount of water used for cleaning without using an acid which requires wastewater treatment. Consequently, the filtering performance of the filter cloth can be restored to almost its brand-new level, when the filter cloth is cleaned.

### EXPLANATION OF REFERENCE NUMERALS

- 1: filter cloth cleaning device
- 2: high-pressure high-temperature water-generating unit
- 3: spray nozzle (cleaning nozzle)
- 4: filter cloth tensioner
- 5: filter cloth-winder shaft for cleaning
- 6: filter cloth-winder shaft
- 7: filter cloth
- 8: dewaterer
- 9: spray shape
- 10: filter cloth-advancing direction

## Claims

1. A filter cloth cleaning method with which a filter cloth of a filter press dewaterer for dewatering a slurry containing a calcium component is cleaned with any one of water, steam, and a mixture thereof,
the method **characterized in that** the filter cloth is cleaned by spraying, on the filter cloth to which a tension of 10 to 2000 N/5cm is applied, any one of:
water with a temperature of 100 to 140°C and a pressure of 50 to 200 kg/cm²;
steam with a temperature of 100 to 140°C; and
a mixture thereof.

2. A filter cloth cleaning method with which a polypropylene filter cloth of a filter press dewaterer for dewatering a slurry containing a calcium component is cleaned with any one of water, steam, and a mixture thereof,
the method **characterized in that** the filter cloth is cleaned by spraying, on the filter cloth to which a tension of 10 to 2000 N/5cm is applied, any one of:
water with a temperature of 100 to 120°C and a pressure of 50 to 200 kg/cm²;
steam with a temperature of 100 to 120°C; and
a mixture thereof.

3. A filter cloth cleaning method with which a polypropylene filter cloth of a filter press dewaterer for dewatering a fly-ash slurry is cleaned with any one of water, steam, and a mixture thereof,
the method **characterized in that** the filter cloth is cleaned by spraying, on the filter cloth to which a tension of 10 to 2000 N/5cm is applied, any one of:
water with a temperature of 110 to 120°C and a pressure of 80 to 100 kg/cm²;
steam with a temperature of 110 to 120°C; and
a mixture thereof.

4. A filter cloth cleaning device with which a filter cloth of a filter press dewaterer for dewatering a slurry containing a calcium component is cleaned with any one of water, steam, and a mixture thereof,
the device **characterized by** comprising:
a tensioner that applies a tension to the filter cloth;
a mixture-generating unit that generates a cleaning liquid by heating and pressurizing water to a high temperature and a high pressure, by heating steam to a high temperature, or by producing a mixture thereof; and
a cleaning nozzle for spraying the cleaning liquid on the filter cloth,
the device **characterized in that** the mixture-generating unit sprays the cleaning liquid on the filter cloth to which a tension of 10 to 2000 N/5cm is applied by the tensioner, the cleaning liquid being any one of:
water with a temperature of 100 to 140°C and a pressure of 50 to 200 kg/cm²;
steam with a temperature of 100 to 120°C; and
a mixture thereof.

5. A filter cloth cleaning device with which a polypropylene filter cloth of a filter press dewaterer for dewatering a fly-ash slurry is cleaned with any one of water, steam, and a mixture thereof,
the device **characterized by** comprising:
a tensioner that applies a tension to the filter cloth;
a mixture-generating unit that generates a cleaning liquid by heating and pressurizing water to a high temperature and a high pressure, by heating steam to a high temperature, or by producing a mixture thereof; and
a cleaning nozzle for spraying the cleaning liquid on the filter cloth,
the device **characterized in that** the mixture-generating unit sprays the cleaning liquid on the filter cloth to which a tension of 10 to 2000 N/5cm is applied by the tensioner, the cleaning liquid being any one of:
water with a temperature of 110 to 140°C and a pressure of 80 to 100 kg/cm²;
steam with a temperature of 110 to 140°C; and
a mixture thereof.

## Amended claims

### Amended claims under Art. 19.1 PCT

1. A filter cloth cleaning method with which a filter cloth of a filter press dewaterer for dewatering a slurry containing a calcium component is cleaned with any one of water, steam, and a mixture thereof,
the method **characterized in that** the filter cloth is cleaned by spraying, on the filter cloth to which a tension of 10 to 2000 N/5cm is applied, any one of:
water with a temperature of 100 to 140°C and a pressure of 50 to 200 kg/cm²;
steam with a temperature of 100 to 140°C; and
a mixture thereof.

2. A filter cloth cleaning method with which a polypropylene filter cloth of a filter press dewaterer for dewatering a slurry containing a calcium component is cleaned with any one of water, steam, and a mixture thereof,
the method **characterized in that** the filter cloth is cleaned by spraying, on the filter cloth to which a tension of 10 to 2000 N/5cm is applied, any one of:
water with a temperature of 100 to 120°C and a pressure of 50 to 200 kg/cm²;
steam with a temperature of 100 to 120°C; and
a mixture thereof.

3. A filter cloth cleaning method with which a polypropylene filter cloth of a filter press dewaterer for dewatering a fly-ash slurry is cleaned with any one of water, steam, and a mixture thereof,
the method **characterized in that** the filter cloth is cleaned by spraying, on the filter cloth to which a tension of 10 to 2000 N/5cm is applied, any one of:
water with a temperature of 110 to 120°C and a pressure of 80 to 100 kg/cm²;
steam with a temperature of 110 to 120°C; and
a mixture thereof.

4. A filter cloth cleaning device with which a filter cloth of a filter press dewaterer for dewatering a slurry containing a calcium component is cleaned with any one of water, steam, and a mixture thereof,
the device **characterized by** comprising:
a tensioner that applies a tension to the filter cloth;
a mixture-generating unit that generates a cleaning liquid by heating and pressurizing water to a high temperature and a high pressure, by heating steam to a high temperature, or by producing a mixture thereof; and
a cleaning nozzle for spraying the cleaning liquid on the filter cloth,
the device **characterized in that** the mixture-generating unit sprays the cleaning liquid on the filter cloth to which a tension of 10 to 2000 N/5cm is applied by the tensioner, the cleaning liquid being any one of:
water with a temperature of 100 to 140°C and a pressure of 50 to 200 kg/cm²;
steam with a temperature of 100 to 140°C; and
a mixture thereof.

5. A filter cloth cleaning device with which a polypropylene filter cloth of a filter press dewaterer for dewatering a fly-ash slurry is cleaned with any one of water, steam, and a mixture thereof,
the device **characterized by** comprising:
a tensioner that applies a tension to the filter cloth;
a mixture-generating unit that generates a cleaning liquid by heating and pressurizing water to a high temperature and a high pressure, by heating steam to a high temperature, or by producing a mixture thereof; and
a cleaning nozzle for spraying the cleaning liquid on the filter cloth,
the device **characterized in that** the mixture-generating unit sprays the cleaning liquid on the filter cloth to which a tension of 10 to 2000 N/5cm is applied by the tensioner, the cleaning liquid being any one of:
water with a temperature of 110 to 120°C and a pressure of 80 to 100 kg/cm²;
steam with a temperature of 110 to 120°C; and
a mixture thereof.

Statement under Art. 19.1 PCT
The amendment of Claim 4 is to change the temperature range of the steam from "100 to 140°C" to "100 to 120°C". Claim 4 was originally described as a product invention based on Claim 1. Claim 4 is amended so as to be consistent with the description of Claim 1.

The amendment of Claim 5 is to change the temperature ranges of the water and the steam from "100 to 140°C" to "100 to 120°C". Claim 5 was originally described as a product invention based on Claim 3. Claim 5 is amended so as to be consistent with the description of Claim 3.
